# EUROPÄISCHE PATENTSCHRIFT

(11) **EP 2 802 123 B1**
(45) Veröffentlichungstag und Bekanntmachung des Hinweises auf die Patenterteilung: **18.01.2017**
(21) Anmeldenummer: 13167244.6
(22) Anmeldetag: 10.05.2013
(51) Int. Cl.: H04W 4/00, H04L 29/08, A22C 18/00

(54) **Vorrichtung und Verfahren zum Übertragen von Prozessdaten bei der Lebensmittelherstellung**
Apparatus and method for transmission of process data in food production
Dispositif et procédé de transmission des données pour la fabrication de produits alimentaires

(43) Veröffentlichungstag der Anmeldung: 12.11.2014
(73) Patentinhaber: Albert Handtmann Maschinenfabrik GmbH & Co. KG, 88400 Biberach (DE)
(72) Erfinder: Schrader, Wolfgang, 88400 Biberach (DE); Miller, Lothar, 88483 Burgrieden - Rot (DE)
(74) Vertreter: Grünecker Patent- und Rechtsanwälte PartG mbB

(56) Entgegenhaltungen:
- EP-A1- 1 885 085
- EP-A2- 2 073 315
- WO-A2-2006/067528
- DE-U1- 29 624 219
- US-A- 5 958 030
- US-A1- 2009 325 625

## Beschreibung

Die vorliegende Erfindung betrifft ein Verfahren und eine Vorrichtung zum Übertragen von Prozessdaten zwischen unterschiedlichen, an einem Prozess zur Lebensmittelherstellung, vor allem von Fleisch und Wurstwaren, beteiligten Geräten, insbesondere Geräten einer Fülllinie - z.B. für ethernetbasierte Feldbussysteme.

Ein solches Verfahren und eine solche Vorrichtung sind bereits aus dem Stand der Technik, der zum Beispiel nachfolgend und im Zusammenhang mit Figur 7 erläutert ist, bekannt. Aus der EP 1 885 085 A1 ist ebenfalls bereits die berührungslose Energie- und Datenversorgung von Busteilnehmern bekannt. Die einzelnen Busteilnehmer werden hier auch als Geräte bezeichnet, jedoch handelt es sich nicht um die Vorsatzgeräte einer Füllmaschine. Die Geräte beziehungswiese Busteilnehmer dieser Druckschrift sind zum Beispiel Logikeinheiten, Signaleinheiten, Zählereinheiten, die gekapselt sein können und in Schaltschränken untergebracht sind. Die Datenkommunikation zwischen zwei Geräten erfolgt über eine Datenkopplungsschnittstelle. Die Datenübertragung kann insbesondere induktiv erfolgen. Die Kapselung ermöglicht zum Beispiel auch den Einsatz im Lebensmittelbereich.

Diese Druckschrift beschreibt jedoch keine Datenkommunikation zwischen den Geräten einer Fülllinie, wobei insbesondere der Übertragungspfad zwischen diesen Geräten liegt und der Abstand zwischen Sender und entsprechenden Empfänger in einem Bereich von 1 cm bis 1 m liegt.

Die WO 2006/067528 A2 beschreibt ebenfalls bereits kontaktlose Verbindungssysteme. Auch die DE 296 24 219 U1 beschreibt bereits ein Bussystem zum Übertragen von Daten.

Bei der Lebensmittelherstellung, insbesondere bei der Fleisch- und Wurstwarenherstellung, gibt es in einer Produktionslinie mehrere einzelne Geräte, deren Funktionen aufeinander abgestimmt werden müssen. Bei der Prozessdatenübertragung für ethernetbasierte Feldbussysteme werden bislang herkömmliche Kabel und Stecker verwendet. Kabel und Stecker führen bei Maschinen in rauer Umgebung häufig zu Störungen, Stillständen und Ausfällen.

Bei elektrischen Steckverbindern ist im ungesteckten Zustand besonders der Steckerpin und der zugehörige Buchsenkontakt anfällig für mechanische Beschädigung, Verschmutzung und Korrosion. Bei den meisten am Markt erhältlichen Steckverbindern können im ausgesteckten Zustand sogar Wasser oder Reinigungschemikalien durch den Steckverbinder in das Kabel eindringen und dieses durch Korrosion nachhaltig schädigen. Auch der Übergang vom Steckerpin bzw. Buchsenkontakt zum Kabel ist wegen der unterschiedlichen Materialien stark oxidationsgefährdet. Das führt dann zu hohen Übergangswiderständen und Kriechströmen.

Als Alternative für eine Prozessdatenübertragung mit Hilfe von Kabeln wird derzeit auch eine Datenübertragung mittels WLAN oder Bluetooth verwendet.

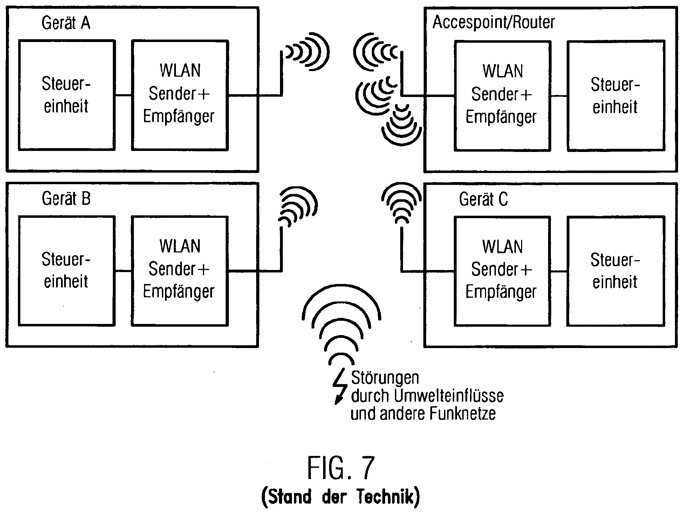

Fig. 7 zeigt eine entsprechende Lösung. Für die Funkübertragung werden bestehende Standards verwendet. Das Frequenzband liegt in einem Bereich von 2,4 oder 5 oder 60 GHz, wie z.B. WLAN 802.11X oder Bluetooth 3.0+HS.

Wie insbesondere aus der Fig. 7 hervorgeht, besteht ein WLAN in der Regel aus einem Access Point und mehreren Teilnehmern, die sich die zur Verfügung stehende Bandbreite teilen. Die einzelnen Geräte A, B, C kommunizieren dabei mit dem entsprechenden Access Point/Router. Hier sind Störungserkennungs-, Kollisionserkennungs- und Arbitrierungsmechanismen notwendig. Das macht das zeitliche Verhalten schlecht einschätzbar und die Antwortzeiten unvorhersehbar. Bluetooth bietet ähnliche Möglichkeiten und hat ähnliche Nachteile.

Aber auch diese Lösung weist insofern Nachteile auf, als dass sie relativ langsam ist gegenüber Kabelverbindungen und vor allem anfällig gegen Funkstörungen. Außerdem ergibt sich insbesondere bei mehreren Sendern der Nachteil, dass der Empfänger auf den gewünschten Sender eingestellt werden muss, was einen erheblichen Konfigurationsaufwand und Fehlerquellen mit sich bringt. Nur wenige Funkfrequenzen sind verfügbar. Wenn innerhalb der Reichweite mehrere Sender und Empfänger betrieben werden, gibt es Störungen durch benachbarte Sender. Die Bandbreite muss mit anderen Geräten geteilt werden. Falls die verfügbare Bandbreite nicht ausreicht, können die Geräte nicht gleichzeitig betrieben werden. Ein passender Funkkanal muss ausgewählt und eingestellt werden. Die zeitliche Aufteilung der Übertragungskapazität spielt ebenfalls eine Rolle, so dass auf freie Kanäle gewartet werden muss und darüber hinaus kostet die Wiederholung der Übertragung bei gestörtem Empfang Zeit. Auch das Wechseln des Kanals bei neu auftretenden Störungen kostet Zeit. Dieses Verfahren ist darüber hinaus nicht deterministisch. Es kann nicht vorausgesagt werden, wie lange eine erfolgreiche Übertragung dauert. Insgesamt kann keine Prozessdatenübertragung in Echtzeit vorgenommen werden.

Hiervon ausgehend liegt der vorliegenden Erfindung die Aufgabe zugrunde, ein verbessertes Verfahren und eine verbesserte Vorrichtung zur Datenübertragung, insbesondere zwischen zwei Geräten zur Lebensmittelherstellung, die auf einfache Art und Weise eine zuverlässige und schnelle Datenübertragung in Echtzeit ermöglichen.

Erfindungsgemäß wird diese Aufgabe durch die Merkmale der Ansprüche 1 und 11 gelöst.

Bei dem erfindungsgemäßen Verfahren zum Übertragen von Prozessdaten zwischen unterschiedlichen, an einem Prozess zur Lebensmittelherstellung beteiligten Geräten, insbesondere Geräten einer Fülllinie, erfolgt die Datenkommunikation vorteilhafterweise zwischen zwei Geräten jeweils ausschließlich zwischen einem Sender eines ersten Geräts und einem Empfänger eines zweiten Geräts und/oder zwischen einem Sender des zweiten Geräts und einem Empfänger des ersten Geräts. Der Übertragungspfad liegt dabei zwischen den Geräten.

Das bedeutet, dass die Anzahl der Teilnehmer auf zwei reduziert ist. Somit kann den beiden Teilnehmern die gesamte Bandbreite zur Verfügung gestellt werden. Somit entfällt die ständige Neuarbitrierung des Funkkanals. Die Verfügbarkeit der Funkstrecke wird erhöht und die Reaktionszeit reduziert. Somit ist eine zuverlässige Übertragung in Echtzeit möglich. Das bedeutet, dass die Daten für die entsprechenden Geräte nicht über den Access Point bzw. Router übertragen werden, sondern die Kommunikation direkt von Gerät zu Gerät erfolgt.

Es ist auch möglich, dass ein Gerät mehrere Sender und entsprechende gegenüberliegende Empfänger aufweist.

Gemäß der Erfindung kommuniziert also ein Sender eines ersten Geräts ausschließlich mit einem entsprechenden Empfänger eines zweiten Geräts, derart, dass der Empfänger des zweiten Geräts die Daten des ersten Geräts empfängt, Empfänger eines dritten oder weiteres Geräts die Prozessdaten, insbesondere aufgrund zu niedriger Signalhöhen nicht empfangen können. Insbesondere kommunizieren die Sender des zweiten oder weiteren Geräts auch jeweils nur mit einem Empfänger. Die Empfänger des dritten oder weiteren Geräts kommunizieren ebenfalls jeweils nur mit einem Sender.

Dadurch, dass die Daten eines Senders eines bestimmten Geräts jeweils nur von einem bestimmten Empfänger empfangen werden können und von Empfängern anderer Geräte nicht, ergibt sich der Vorteil, dass gleiche Kanäle für unterschiedliche Gerätepaare verwendet werden können.

Es ist bei der Erfindung besonders vorteilhaft, wenn ein Sender jeweils zu dem entsprechenden Empfänger ausgerichtet ist. Dabei verwendet man vorzugsweise Richtantennen als Sender und/oder vorzugsweise auch als Empfänger. Werden entsprechende Richtantennen verwendet, kann die Signalstärke reduziert werden und auf einfache Art und Weise sichergestellt werden, dass das entsprechende Signal nicht durch andere Empfänger empfangen wird.

Um die korrekte Ausrichtung von Sender zu Empfänger beizubehalten, wird zwischen den Geräten eine mechanische Kopplung verwendet.

Die Sendeleistung des Senders des ersten Geräts kann dann derart eingestellt werden, dass nur der Empfänger des zweiten Geräts das Signal empfängt, wobei die Leistung eines Funksignals insbesondere < 100 mW ist. Dies gilt auch für weitere Sender-Empfängerpaare.

Erfindungsgemäß liegt der Abstand I zwischen dem Sender und dem dazugehörigen Empfänger und vorzugsweise auch zwischen den weiteren Sendern und Empfängern in einem Bereich von 0 bis 1 m. Durch die relativ nahe Anordnung der Geräte zueinander kann wiederum die Signalstärke reduziert werden und somit gewährleistet werden, dass die Datenübertragung ausschließlich zwischen zwei Geräten in Form einer Punkt-zu-Punkt-Funkverbindung erfolgt.

Gemäß der vorliegenden Erfindung können also mehrere Gerätepaare im gleichen Frequenzbereich, insbesondere dem gleichen Funkkanal, betrieben werden. Störungen sind nicht zu erwarten.

Wenn mehrere Geräte in Serie angeordnet sind, kann mindestens ein Gerät zwischen dem ersten und letzten Gerät der Serie vom Sender des vorherigen Geräts über seinen Empfänger Daten empfangen und über seinen Sender Daten an das nachfolgende Gerät weiterleiten. Somit können Daten bzw. Nachrichten in einer Reihe von Geräten weitergeschoben werden, d.h. die beteiligten Geräte leiten die Nachricht einfach an den Adressaten weiter.

Dabei steht jedem Paar die volle Bandbreite zur Verfügung. Der gewählte Kanal ist immer frei, es kann immer sofort gesendet werden und im Idealfall treten keine Störungen und damit keine Datenverluste auf. Also gibt es auch keinen Zeitverlust durch wiederholte Übertragung. Eine einfache Fehlerkorrektur auf der Empfängerseite reicht aus. Da nur ein Sender mit ausreichender Feldstärke empfangen wird, ist auch keine Adressierung erforderlich.

Es ist besonders vorteilhaft, wenn die Übertragungsstrecke zwischen Sender und Empfänger abgeschirmt wird. Damit können Störungen durch Umwelteinflüsse und andere Funknetze verhindert werden. Außerdem werden Verzögerungen durch etwaige Fehlerkorrekturen und wiederholte Übertragungen von fehlerhaften Informationspaketen vermieden. Dadurch verbessert sich die Verfügbarkeit der Funkstrecke und die Reaktionszeit reduziert sich.

Gemäß der Erfindung kann zumindest entweder das erste Gerät und zumindest das zweite Gerät jeweils eine kombinierte Sender-Empfängereinrichtung aufweisen, derart, dass eine Übertragung jeweils gleichzeitig nur in einer Richtung möglich ist. Es ist auch möglich, dass zumindest das erste Gerät und zumindest das zweite Gerät jeweils einen Sender und einen Empfänger aufweisen, derart, dass ein gleichzeitiger Datenfluss zwischen den beiden Geräten in zwei Richtungen möglich ist (Duplexbetrieb). Dazu können dann zusätzlich unterschiedliche Frequenzkanäle genutzt werden, um die gegenseitige Beeinflussung zu minimieren.

Vorzugsweise werden die Daten, wie bereits erläutert, über elektromagnetische Wellen, insbesondere Funkwellen, übertragen. Um eine Übertragungsgeschwindigkeit von z.B. 10 oder 100 Mbit/s zu erreichen, wie sie für gängige Feldbusse üblich ist, muss die Übertragungsfrequenz entsprechend hoch gewählt werden. Hier sind gängige Funkstandards wie z.B. WLAN 802.11x mit 2.4 oder 5 GHz geeignet.

Besonders vorteilhaft ist das 60 GHz Band. Es ist fast weltweit ohne Anmeldung und Genehmigung nutzbar, bietet eine hohe Bandbreite und eine störsichere Übertragung. Die hohe Dämpfung durch Luft, die normalerweise ein Nachteil dieses Frequenzbandes ist, wird hier zum Vorteil. Bei Antennen mit entsprechender Richtwirkung ist kaum Beeinflussung durch benachbarte Funkstrecken zu erwarten.

Eine Vorrichtung zur Lebensmittelherstellung insbesondere zum Durchführen des Verfahrens weist mindestens ein erstes Gerät mit einem Sender und ein zweites Gerät mit einem Empfänger auf, wobei die Datenkommunikation zwischen den zwei Geräten jeweils ausschließlich zwischen dem Sender des ersten Geräts und dem Empfänger des zweiten Geräts erfolgt und/oder zwischen einem Sender des zweiten Geräts und einem Empfänger des ersten Geräts. Diese Vorrichtung umfasst also mindestens zwei Geräte, wobei ein Sender eines Geräts ausschließlich mit einem Empfänger eines weiteren Geräts kommunizieren kann und mit keinem weiteren Empfänger der weiteren Geräte der Vorrichtung.

Der Sender ist jeweils zu dem Empfänger gerichtet, wobei hier der entsprechende Sender vorzugsweise als Richtantenne ausgebildet ist und/oder auch der Empfänger als Richtantenne ausgebildet sein kann. Die Vorrichtung weist weiter eine Kopplungseinrichtung auf, um die Geräte mechanisch derart zu koppeln, dass der entsprechende Sender und Empfänger korrekt zueinander ausgerichtet sind, und bleiben.

Gemäß der Erfindung liegt der Abstand L zwischen Sender und Empfänger der beiden kommunizierenden Geräte zwischen 1 cm und 1 m.

Die Vorrichtung weist bevorzugterweise eine Abschirmung auf, wie beispielsweise ein geerdetes Metallblech. Die Abschirmung ist um die Übertragungsstrecke herum zwischen den Geräten angeordnet.

Wie bereits erläutert, kann entweder der Sender und/oder Empfänger als Antenne ausgebildet sein oder aber auch als Optokoppler mit einer Foto- oder Laserdiode als Sender und einem Fotodetektor als Empfänger. Der Frequenzbereich mit vorzugsweise kohärentem Licht liegt dabei in einem Wellenlängenbereich von 400 bis 1000 nm.

Wenn die Vorrichtung mehrere Geräte in Serie umfasst, können jeweils zwei benachbarte Geräte miteinander kommunizieren derart, dass eine Information von einem Gerät zum anderen über dazwischenliegende Geräte weitergeleitet werden kann. Wenn also mehr als zwei Geräte miteinander kommunizieren sollen, können zwischen den Geräten jeweils unabhängige Verbindungen eingerichtet werden. Die beteiligten Geräte leiten dann die Nachrichten einfach an den Adressaten weiter. Die Geräte dienen auch gleichzeitig als Abschirmung der Übertragungsstrecke.

Die vorliegende Erfindung wird nachfolgend unter Bezugnahme der folgenden Figuren näher erläutert.
- Fig. 1: zeigt grob schematisch eine Vorrichtung, hier eine Fülllinie, gemäß der vorliegenden Erfindung.
- Fig. 2: zeigt grob schematisch eine Ausführungsform der vorliegenden Erfindung.
- Fig. 3: zeigt grob schematisch die in Fig. 2 gezeigte Ausführungsform mit Abschirmung.
- Fig. 4: zeigt grob schematisch ein weiteres Ausführungsbeispiel mit mehr als zwei beteiligten Geräten.
- Fig. 5: zeigt grob schematisch eine weitere Ausführungsform, die für den Duplexbetrieb geeignet ist.
- Fig. 6: zeigt eine weitere Ausführungsform gemäß der vorliegenden Erfindung.
- Fig. 7: zeigt grob schematisch ein WLAN-Netzwerk gemäß dem Stand der Technik.

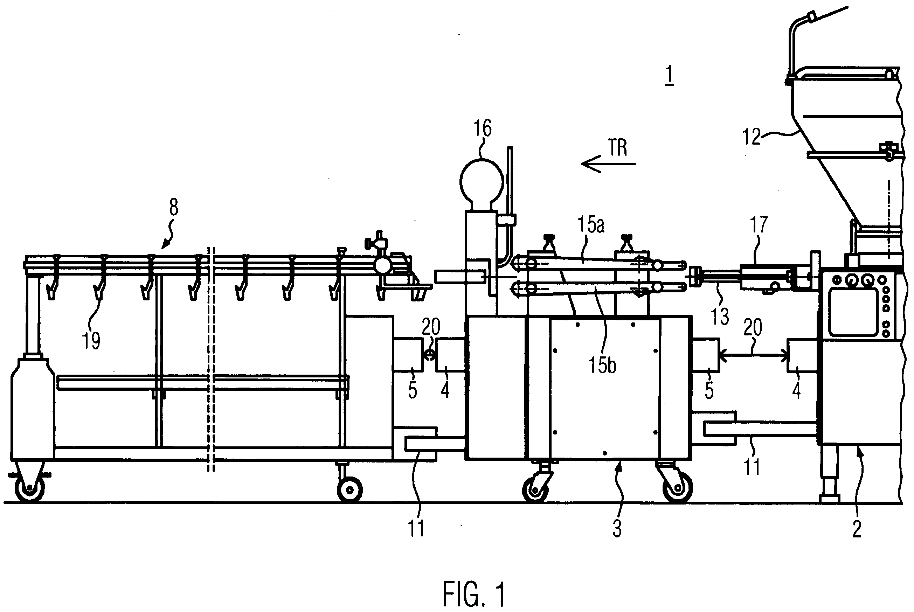

Fig. 1 zeigt in schematischer Darstellung eine Fülllinie mit mehreren Geräten 2, 3, 8. Als erstes Gerät ist hier beispielsweise eine Füllmaschine 2 vorgesehen. Die Füllmaschine weist in bekannter Weise einen Trichter 12 auf, in den beispielsweise pastöse Masse, wie Wurstbrät, eingefüllt wird und über ein nicht dargestelltes Förderwerk durch ein Füllrohr 13 in eine Wursthülle ausgestoßen wird. Der Füllmaschine 2 ist beispielsweise eine in Transportrichtung TR nachgeschaltete Transporteinrichtung 3 angeordnet, die zwei umlaufende Förderbänder 15a,b aufweist, zwischen denen der gefüllte Wurststrang transportiert wird. Die Transporteinrichtung 3 kann den gefüllten Wurststrang auch gegen Verdrehen halten, wenn der gefüllte Wurststrang durch eine Abdreheinheit 17 in Rotation versetzt wird, um eine Abdrehstelle zu erzeugen. Die Transporteinrichtung 3 stellt dabei ein weiteres zweites Gerät gemäß der vorliegenden Erfindung dar.

Ferner kann in der Linie im zweiten Gerät auch ein Clipper 16 angeordnet sein, zum Setzen eines Clips zwischen zwei Wurstportionen. Schließlich ist bei diesem speziellen Beispiel auch ein Hänger 8 angeordnet, der an seinen Haken 19 einzelne Würste oder Wurstportionen aufnehmen und weitertransportieren kann, und ein drittes Gerät darstellt.

Der in Fig. 1 gezeigte Aufbau ist nur ein Beispiel. Eine Fülllinie kann auch einen anderen Aufbau mit anderen Vorsatzgeräten in einer anderen Reihenfolge aufweisen. Zur Übertragung von Prozessdaten von einem Gerät zum anderen umfasst jedes der Geräte einen entsprechenden Sender bzw. Empfänger. Die Füllmaschine 2 weist hier einen ersten Sender 4 auf und die Transporteinrichtung 3 weist einen Empfänger 5 auf. Somit kann die Füllmaschine Daten von dem ersten Sender 4 zu dem zweiten Sender 5 über die Datenübertragungsstrecke 20 übermitteln. Auch die Transporteinrichtung 3 weist einen ersten Sender 9 auf und der Hänger 8 einen ersten Empfänger 10, so dass auch hier über die Übertragungsstrecke 20 Daten von der Transporteinrichtung an den Hänger geleitet werden können.

Die drei Geräte 2, 3 und 8 sind der Reihe nach über mechanische Kopplungseinrichtungen 11 jeweils mechanisch miteinander gekoppelt derart, dass die gegenüberliegenden Sender und Empfänger ( von null bis auf wenige Zentimeter Abweichung ) zueinander ausgerichtet bleiben können.

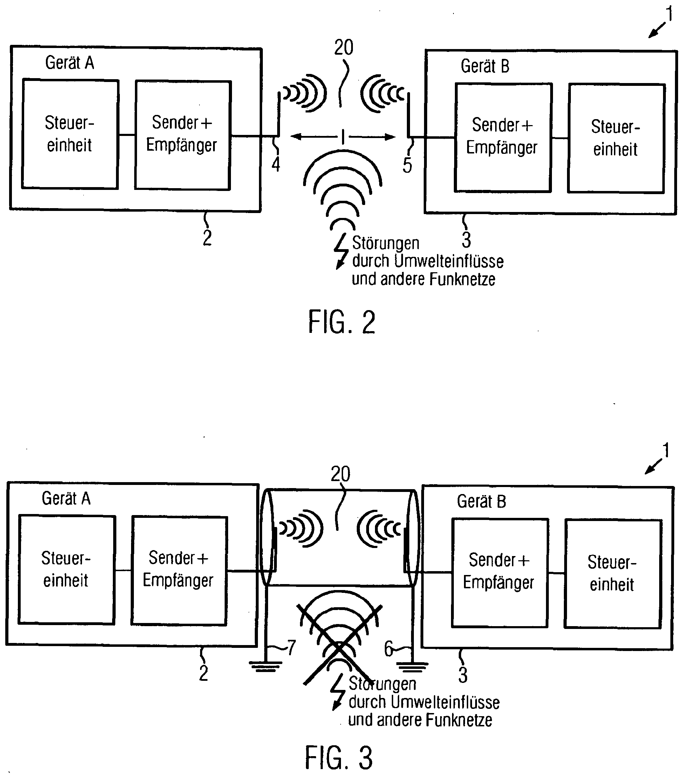

Die erfindungsgemäße Datenübertragung wird nachfolgend unter Bezugnahme der Fig. 2 näher erläutert.

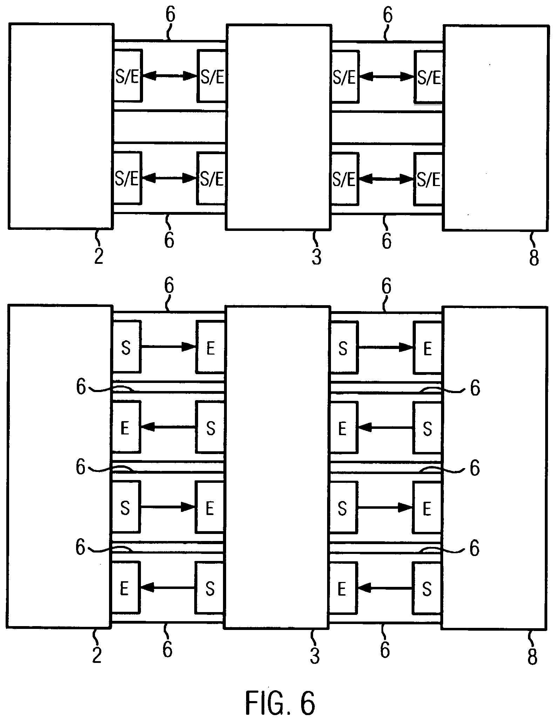

Fig. 2 zeigt zwei Geräte 2 und 3, die miteinander kommunizieren, beispielsweise die Füllmaschine 2 und die Transporteinrichtung 3. Sowohl das Gerät 2 als auch das Gerät 3 weisen jeweils eine Steuereinheit auf sowie einen Sender und Empfänger. Die Vorrichtungen arbeiten in einem Frequenzbereich von 2,4 bis 60 GHz. In diesem Fall sind kombinierte Sender- und Empfängereinrichtungen 4, 5 insbesondere in Form von Richtantennen vorgesehen. Die Antennen sind direkt zueinander ausgerichtet und weisen einen geringen Abstand in einem Bereich von 1 cm bis 1 m auf. Durch die korrekte Ausrichtung und die geringe Abmessung des Übertragungspfads 20 ist nur eine geringe Sendeleistung von < 100 mW notwendig. Dadurch, dass die Anzahl der Teilnehmer, die miteinander kommunizieren, auf jeweils zwei reduziert wird, die Antennen nahe zusammengebracht werden und die Antennen mit Richtwirkung eingesetzt werden, kann die gesamte Bandbreite den beiden Teilnehmern bereitgestellt werden. Somit entfällt die ständige Neuarbitrierung des Funkkanals, die Verfügbarkeit der Funkstrecke wird erhöht und die Reaktionszeit reduziert. Im Gegensatz zu dem in Fig. 6 gezeigten bekannten Netzwerk gibt es hier keinen Access Point oder Router.

Die Sendeleistung und Richtwirkung der Antenne wird so gewählt, dass der zugeordnete Empfänger ein ausreichend hohes Signal empfängt und gleichzeitig ein Empfänger eines weiteren bzw. benachbarten Geräts nur ein sehr geringes Signal erhält, dessen Höhe zu gering ist, um die Prozessdaten zu empfangen. Durch die Anordnung der Antennen zwischen den Geräten schirmen die Gehäuse der Geräte die Antennen ab. Die geringe Reichweite der elektromagnetischen Wellen, beispielsweise im 60 GHz-Band, bietet hier Vorteile.

Um die Übertragungsstrecke noch weiter gegen Störungen und äußere Einflüsse zu schützen, kann eine Abschirmung 6 vorgesehen sein, die vorzugsweise rund um den Übertragungsweg 20 vorgesehen ist, wie in Fig. 3 dargestellt ist. Auch die Antennen befinden sich innerhalb der Abschirmung. Als Abschirmung wird beispielsweise Metallblech verwendet. Die Abschirmung 6 ist, wie durch das Bezugszeichen 7 dargestellt, geerdet. Somit kann eine Störung durch Umwelteinflüsse und andere Funknetze minimiert werden. Somit können Verzögerungen durch Fehlerkorrekturen und wiederholte Übertragungen von fehlerhaften Informationspaketen vermieden werden. Dadurch verbessert sich die Verfügbarkeit der Funkstrecke und die Reaktionszeit reduziert sich.

Das bedeutet ganz allgemein, dass beispielsweise die Füllmaschine 2 Daten mit der Transporteinrichtung 3 über den Übertragungsweg 20 austauschen kann, jedoch nicht direkt mit dem Gerät 8 kommunizieren kann, da der Empfänger 10 des dritten Geräts 8 die Funksignale des Senders 4 nicht mehr empfangen kann.

So können auch mehrere Gerätepaare gleichzeitig und unabhängig voneinander auf dem gleichen Funkkanal betrieben werden. Auch mehrere parallel zueinander angeordnete Fülllinien können den gleichen Funkkanal verwenden. Dabei steht jedem Paar die volle Bandbreite zur Verfügung. Der gewählte Kanal ist immer frei, es kann immer sofort gesendet werden und im Idealfall treffen keine Störungen und damit keine Datenverluste auf. Es gibt auch keinen Zeitverlust durch wiederholte Übertragungen. Gegebenenfalls kann eine Fehlerkorrektur durchgeführt werden wobei eine einfache Fehlerkorrektur auf der Empfängerseite reicht aus.

Um sicherzustellen, dass bei der Übertragung alle von Gerät 2 gesendeten Daten auch korrekt in Geräte 3 ankommen, gibt es verschiedene Verfahren.

Zunächst muss Gerät 3 erkennen können, ob Daten fehlen oder durch Störungen verfälscht wurden. Wenn Gerät 3 einen Fehler erkennt, kann er die Daten bei Gerät 2 erneut anfordern. Dieses Verfahren ist für eine Echtzeitübertragung schlecht geeignet, weil sich nicht vorhersagen lässt, wie viele Anforderungen nötig sind, bis die Daten korrekt übermittelt sind. Damit lässt sich auch die dafür erforderliche Zeit nicht vorhersagen. Wenn die Übertragungsstrecke, wie beim hier beschriebenen Verfahren sehr zuverlässig und unempfindlich gegen Störungen ist, reicht es z.B. aus, die Daten im Sender durch zusätzliche redundante Informationen zur Fehlerkorrektur zu ergänzen. Der Empfänger kann damit, einen definierten Anteil von verfälscht empfangen Daten rekonstruieren, ohne die Daten erneut anzufordern. So wird keine zusätzliche Zeit für die Übertragung benötigt.

Da von einem Empfänger jeweils nur ein Sender mit ausreichender Feldstärke empfangen wird, ist auch keine Adressierung erforderlich. Eine Übertragung in Echtzeit ist möglich.

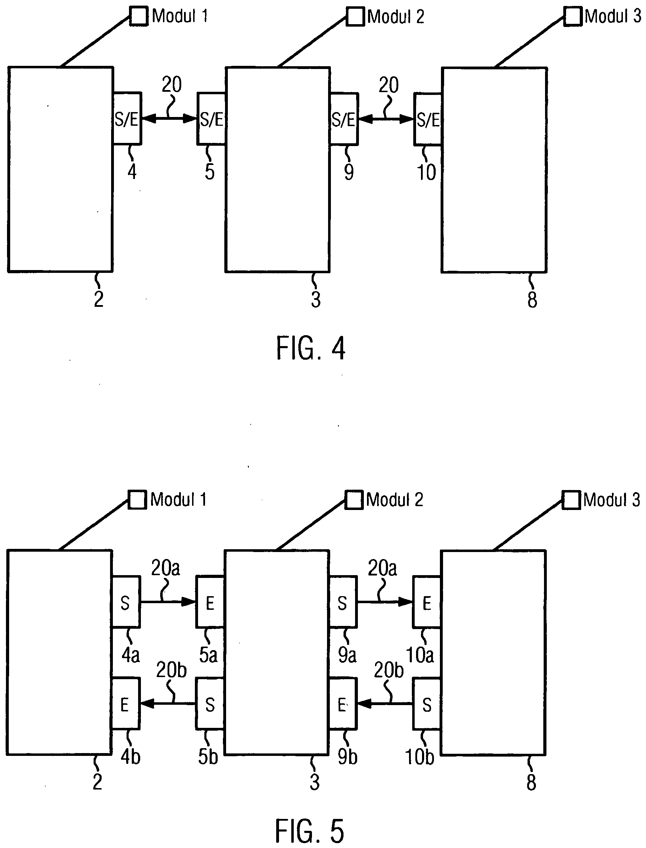

Wenn, wie in Fig. 1 gezeigt ist und auch näher in Zusammenhang mit Fig. 4 erläutert wird, mehrere Geräte miteinander kommunizieren sollen, können zwischen den Geräten jeweils unabhängige Verbindungen eingerichtet werden. Die beteiligten Geräte leiten dann die Nachrichten einfach über ein dazwischenliegendes Gerät an den Adressaten weiter. Fig. 4 zeigt nun schematisch die drei Geräte 2, 3 und 8. Soll nun eine Information von der Füllmaschine 2 an den Hänger 8 weitergeleitet werden, so können die entsprechenden Daten über den Sender 4 und den Empfänger 5 an das zweite Gerät, im konkreten Ausführungsbeispiel die Transporteinrichtung 3, weitergeleitet werden und von dieser über den Sender 9 zum Empfänger 10 des dritten Geräts, also hier dem Hänger. In gleicher Weise kann der Hänger 8 mit der Füllmaschine 2 kommunizieren. Das bedeutet also, wenn eine Vorrichtung mehrere Geräte in Serie umfasst, wobei jeweils zwei benachbarte Geräte miteinander kommunizieren, dass eine Information von einem Gerät zum anderen über dazwischenliegende Geräte weitergeleitet werden kann.

Bei den vorherigen Figuren wurden kombinierte Sender-Empfänger-Einrichtungen 4, 5, 9, 10 mit einer gemeinsamen Antenne gezeigt. Dann ist die Übertragung jeweils nur in eine Richtung gleichzeitig möglich. Alternativ können zwei getrennte Übertragungsstrecken 20a,b, wie in Fig. 5 gezeigt ist, eingesetzt werden. Dann ist ein gleichzeitiger Datenfluss in beide Richtungen möglich. Dazu können zusätzlich unterschiedliche Frequenzkanäle genutzt werden, um die gegenseitige Beeinflussung zu minimieren. Die Funkverbindung zwischen den Geräten kann also auf gleicher Frequenz stattfinden, kann aber auch einstellbar oder sogar selbsteinstellend ausgeführt sein.

Bei den vorherigen Ausführungsbeispielen wurde die Datenübertragung mit Hilfe von elektromagnetischen Funksignalen erläutert. Eine Datenübertragung ist jedoch ebenfalls in gleicher Weise über Lichtwellen, insbesondere kohärentes Licht in einem Wellenlängenbereich von 400 nm bis 1000 nm möglich. Dabei werden dann als Sender 4, 9 entsprechende Foto- oder Laserdioden verwendet und als Empfänger entsprechende Fotodetektoren, z. B. Fototransistoren oder PIN-Dioden.

Nachfolgend wird das erfindungsgemäße Verfahren unter Bezugnahme der Fig. 1 bis 5 näher erläutert. Bei der Wurstherstellung werden von der Hauptsteuerung der Füllmaschine 2 Prozessdaten erzeugt, insbesondere auch Prozessdaten für die Transporteinrichtung 3 und den Hänger 8. Die Datenkommunikation zwischen der Füllmaschine 2 und der Transporteinrichtung 3 erfolgt ausschließlich zwischen dem Sender 4 und dem Empfänger 5. Der Empfänger 5 kann nur Daten von dem Sender 4 empfangen. Gleichzeitig kann nur der Empfänger 5 Daten von dem Sender 4 empfangen. Die Sender und Empfänger 9, 10 die zwischen den weiteren Geräten angeordnet sind, können die entsprechenden Funksignale aufgrund zu niedriger Signalhöhe nicht empfangen. Dem Sender und Empfänger 4, 5 steht die gesamte Übertragungskapazität zur Verfügung. Eine Adressierung ist nicht notwendig. Das Gerät 3 kann dann entsprechend den Prozessdaten, beispielsweise die Transportbänder 15a,b und den Clipper betreiben. Über den Sender 4 werden auch Prozessdaten, die den Hänger 8 betreffen, an den Empfänger 5 weitergeleitet. Entsprechende vom Empfänger 5 empfangene Daten werden dann über eine entsprechende Steuereinheit direkt, in diesem Falle dem Sender 9 weitergeleitet, der wiederum entsprechende Daten sendet, die ausschließlich von dem Empfänger 10 empfangen werden können. Über die vom Empfänger 10 empfangenen Prozessdaten kann dann der Hänger 8 entsprechend betrieben werden.

Die Sender und Empfänger können entweder, wie im Zusammenhang mit Fig. 4 erläutert wurde, aufgebaut sein, so dass gleichzeitig eine Übertragung zwischen zwei Geräten in nur einer Richtung möglich ist oder aber es können die Sender und Empfänger, wie im Zusammenhang mit Fig. 5 erklärt wurde, angeordnet sein, damit ein Duplex-Betrieb möglich ist, d.h. ein gleichzeitiger Datenfluss in beide Richtungen.

Auch die vom entsprechenden Empfänger 9 des zweiten Geräts empfangenen Daten können dann über eine entsprechende Leitung und eine entsprechende Steuereinheit über einen entsprechenden Sender 5, 5a an einen entsprechenden Empfänger 4, 4a zurück zur Füllmaschine geleitet werden. Die mechanischen Befestigungseinrichtungen 11 sorgen dafür, dass die entsprechenden Antennen stets korrekt zueinander ausgerichtet bleiben. Das Gehäuse des zweiten Geräts 3 schirmt hier die Übertragungspfade 20 zwischen den Geräten 3, 8 und zwischen den Geräten 3, 2 voneinander ab. Es könnte jedoch auch noch zusätzlich eine entsprechende Abschirmung um den Übertragungspfad 20 vorgesehen sein.

Gemäß den vorherigen Ausführungsbeispielen gab es jeweils nur einen Übertragungspfad in eine Richtung, da die Datenübertragung zwischen zwei Geräten ausschließlich zwischen einem Sender eines ersten Geräts und einem Empfänger eines zweiten Geräts und/oder zwischen einem Sender des zweiten Geräts und einem Empfänger des ersten Geräts erfolgt ist. Es ist aber auch möglich wie insbesondere aus der Figur 6 hervorgeht, dass ein Gerät mehrere Sender aufweist und entsprechende gegenüberliegende dazu ausgerichtete Empfänger. Vorzugsweise können dann auch entsprechende Abschirmungen 6 vorgesehen sein. Die mehreren Sender zwischen zwei Geräten müssen dann aber vorzugsweise auf verschiedenen Kanälen senden. Bei sehr guter Abschirmung kann gegebenenfalls der gleiche Kanal verwendet werden. Wie bei den vorherigen Ausführungsbeispielen können entweder getrennte Sender und Empfänger oder aber Sender-Empfänger-Kombinationen verwendet werden. Vorzugsweise wird jedoch zwischen zwei Geräten nur eine Übertragungsstrecke in eine Richtung gewählt, wie dies bei den in den Fig. 2 bis 5 dargestellten Ausführungsbeispielen der Fall ist.

## Patentansprüche

1. Verfahren zum Übertragen von Prozessdaten zwischen unterschiedlichen, an einem Prozess zur Lebensmittelherstellung beteiligten Geräten (2, 3, 8) einer Füllinie, die eine Füll-maschine (2) und Vorsatzgeräte (3, 8) als Geräte umfasst,
**dadurch gekennzeichnet, dass**
die Datenkommunikation zwischen zwei Geräten der beteiligten Geräte jeweils ausschließlich zwischen mindestens einem Sender (4, 4a) des ersten Geräts (2) und mindestens einem Empfänger (5, 5a) des zweiten Geräts (3) erfolgt und/oder
zwischen mindestens einem Sender (5, 5b) des zweiten Geräts (3) und mindestens einem Empfänger (4, 4b) des ersten Geräts,
wobei der Übertragungspfad zwischen den beiden Geräten (2, 3) liegt und der Abstand I zwischen dem Sender (4, 4a) und dem entsprechenden Empfänger (5, 5a) in einem Bereich von 1 cm bis 1 m liegt.

2. Verfahren nach Anspruch 1, **dadurch gekennzeichnet, dass** der Sender (4, 4a) des ersten Geräts (2) ausschließlich mit dem entsprechenden Empfänger (5, 5a) des zweiten Geräts (3) kommuniziert, derart, dass der Empfänger (5) des zweiten Geräts (3) die Daten des Senders (4) des ersten Geräts (2) empfängt, Empfänger (10a, 10) eines dritten oder weiteren Geräts (8) diese Prozessdaten nicht empfangen können und die Empfänger (10a) des dritten oder weiteren Geräts (8), jeweils nur mit einem Sender kommunizieren.

3. Verfahren nach Anspruch 1 oder 2, **dadurch gekennzeichnet, dass** ein entsprechender Sender (4, 4a), insbesondere eine Sendeantenne, zum entsprechenden Empfänger (5, 5a), insbesondere Empfängerantenne, gerichtet wird.

4. Verfahren nach Anspruch 3, **dadurch gekennzeichnet, dass** die korrekte Ausrichtung von Sender (4) zu Empfänger (5) durch eine mechanische Kopplung (11) zwischen den Geräten (2, 3) aufrechterhalten wird.

5. Verfahren nach mindestens einem der vorhergehenden Ansprüche, **dadurch gekennzeichnet, dass** die Sendeleistung des Senders (4) des ersten Geräts (2) derart eingestellt wird, dass nur der entsprechende Empfänger (5, 5a) des zweiten Geräts das Signal empfängt, wobei die Leistung eines Funksignals insbesondere < 100 mW ist.

6. Verfahren nach mindestens einem der Ansprüche 1 bis 5, **dadurch gekennzeichnet, dass** mehrere Gerätepaare (2, 3, 8) im gleichen Frequenzbereich betrieben werden.

7. Verfahren nach mindestens einem der vorherigen Ansprüche, **dadurch gekennzeichnet, dass** mehrere Geräte (2, 3, 8) in Serie angeordnet sind, wobei mindestens ein Gerät (2) zwischen dem ersten (2) und letzten Gerät (8) der Serie von einem Sender (4) des vorhergehenden Geräts (2) über seinen Empfänger (5) Daten empfängt und über einen Sender (9) Daten an das nachfolgende Gerät (8) weiterleitet.

8. Verfahren nach mindestens einem der Ansprüche 1 bis 7, **dadurch gekennzeichnet, dass** die Übertragungsstrecke (20) zwischen Sender (4, 9) und Empfänger (5, 10) nach außen abgeschirmt wird.

9. Verfahren nach mindestens einem der Ansprüche 1 bis 8, **dadurch gekennzeichnet, dass** zumindest das erste Gerät (2) und zumindest das zweite Gerät (3) jeweils eine kombinierte Sender/Empfängereinrichtung (4) aufweist, derart, dass eine Übertragung jeweils gleichzeitig nur in einer Richtung möglich ist oder dass das zumindest erste Gerät (2) und zumindest das zweite Gerät (3) jeweils einen Sender (4a, 4b) und einen Empfänger (5a, 5b) aufweisen, derart, dass ein gleichzeitiger Datenfluss (20a,b) zwischen den beiden Geräten in zwei Richtungen möglich ist.

10. Verfahren nach mindestens einem der Ansprüche 1 bis 9, **dadurch gekennzeichnet, dass** die Daten über elektromagnetische Wellen übertragen werden.

11. Vorrichtung (1) zur Lebensmittelherstellung mit mehreren Geräten (2, 3, 8), wobei die Geräte (2, 3, 8) Geräte einer Fülllinie, die eine Füllmaschine (2) und Vorsatzgeräte (3, 8) als Geräte umfasst, sind, zum Durchführen des Verfahrens nach mindestens einem der Ansprüche 1 bis 10 mit einem ersten Gerät (2) mit mindestens einem Sender (4, 4a) und mit einem zweiten Gerät (3) mit mindestens einem Empfänger (5, 5a), wobei
die Datenkommunikation zwischen zwei Geräten der beteiligten Geräte jeweils ausschließlich zwischen mindestens einem Sender (4, 4a) des ersten Geräts (2) und mindestens einem Empfänger (5, 5a) des zweiten Geräts (3) erfolgt und/oder
zwischen mindestens einem Sender (5, 5b) des zweiten Geräts (3) und mindestens einem Empfänger (4, 4b) des ersten Geräts (2), wobei
der Übertragungspfad zwischen den Geräten liegt und der Abstand I zwischen Sender (4, 4a) und Empfänger (5) der beiden kommunizierenden Geräte zwischen 1 cm und 1 m liegt.

12. Vorrichtung nach Anspruch 11, **dadurch gekennzeichnet, dass** der Sender (4, 4a) zu dem entsprechenden Empfänger (5, 5a) gerichtet ist und die beiden Geräte (2, 3) eine mechanischen Kopplungseinrichtung (6) aufweisen.

13. Vorrichtung nach mindestens einem der vorhergehenden Ansprüche, **dadurch gekennzeichnet, dass** die Vorrichtung eine Abschirmung (6) umfasst, die um die Übertragungsstrecke (20) herum zwischen den Geräten angeordnet ist.

14. Vorrichtung nach mindestens einem der vorhergehenden Ansprüche, **dadurch gekennzeichnet, dass** die Sender und/oder Empfänger als Antennen ausgebildet sind oder als Optokoppler mit einer Leucht- oder Laserdiode als Sender und einem Fotodetektor als Empfänger.

15. Vorrichtung nach mindestens einem der vorhergehenden Ansprüche, **dadurch gekennzeichnet, dass** die Vorrichtung mehrere Geräte (2, 3, 8) in Serie umfasst, wobei jeweils zwei Geräte miteinander kommunizieren, derart, dass eine Information von einem Gerät zum anderen über dazwischenliegende Geräte weitergeleitet werden kann.

## Claims

1. A method for the transmission of process data between different devices (2, 3, 8) involved in a process for the production of food wherein the devices are devices of a filling line (1) comprising a filling machine (2) and attachments as devices,
**characterized in that**
the data communication between two of the involved devices (2, 3) takes place exclusively between at least one transmitter (4, 4a) of the first device (2) and at least one receiver (5, 5a) of the second device (3) respectively, and/or
between at least one transmitter (5, 5b) of the second device (3) and at least one receiver (4, 4b) of the first device and wherein
the transmission path is located between both devices and the distance I between the transmitter (4, 4a) and the corresponding receiver (5, 5a) lies within the range of 1 cm to 1 m.

2. The method according to claim 1, **characterized in that** the transmitter (4, 4a) of the first device (2) communicates exclusively with the corresponding receiver (5, 5a) of the second device (3) in such a way that the receiver (5) of the second device (3) receives the data from the transmitter (4) of the first device (2), but receivers (10a, 10) of a third or additional device (8) cannot receive this process data and the receivers (10a) of the third or additional device (8) each only communicate with one transmitter.

3. The method according to claim 1 or 2, **characterized in that** a corresponding transmitter (4, 4a), in particular a transmitting antenna, is aligned towards a corresponding receiver (5, 5a), in particular receiver antenna.

4. The method according to claim 3, **characterized in that** the correct alignment of the transmitter (4) to the receiver (5) is maintained by means of a mechanical coupling (11) between the devices (2, 3).

5. The method according to at least one of the preceding claims, **characterized in that** the transmission power of the transmitter (4) of the first device (2) is adjusted in such a way that only the corresponding receiver (5, 5a) of the second device receives the signal, wherein the power of a radio signal is especially < 100 mW.

6. The method according to at least one of the claims 1 to 5, **characterized in that** a plurality of pairs of devices (2, 3, 8) can be operated in the same frequency range.

7. The method according to at least one of the preceding claims, **characterized in that** a plurality of devices (2, 3, 8) are disposed in series, wherein at least one device (2) between the first (2) and last device (8) of the series receives data from a transmitter (4) of the preceding device (2) by means of the receiver (5) thereof, and forwards data to the subsequent device (8) by means of a transmitter (9).

8. The method according to at least one of the claims 1 to 7, **characterized in that** the transmission path (20) between the transmitter (4, 9) and the receiver (5, 10) is shielded from the outside.

9. The method according to at least one of the claims 1 to 8, **characterized in that** at least the first device (2) and at least the second device (3) each have a combined transmitter/receiver device (4) such that a transmission in each case is only possible in a single direction at a time, or that at least the first device (2) and at last the second device (3) each have a transmitter (4a, 4b) and a receiver (5a, 5b) such that a flow of data (20a,b) between the two devices is possible in two directions at a time.

10. The method according to at least one of the claims 1 to 9, **characterized in that** the data is transmitted by means of electromagnetic waves.

11. An apparatus (1) for the production of food having a plurality of devices (2, 3, 8), wherein the devices are devices of a filling line comprising a filling machine (2) and attachments as devices for implementing the method according to at least one of the claims 1 to 10 having a first device (2) with at least one transmitter (4, 4a) and having a second device (3) with at least one receiver (5, 5a), wherein
the data communication between two devices of the involved devices (2, 3) takes place exclusively between at least one transmitter (4, 4a) of the first device (2) and at least one receiver (5, 5a) of the second device (3) respectively, and/or
between at least one transmitter (5, 5b) of the second device (3) and at least one receiver (4, 4b) of the first device (2) and wherein
the transmission path is located between the devices and the distance I between the transmitter (4, 4a) and the corresponding receiver (5, 5a) lies within the range of 1 cm to 1 m.

12. The apparatus according to claim 11, **characterized in that** the transmitter (4, 4a) is aligned towards the corresponding receiver (5, 5a) and **in that** the two devices (2, 3) have a mechanical coupling device (6).

13. The apparatus according to at least one of the preceding claims, **characterized in that** the apparatus comprises a shield (6), which is disposed around the transmission path (20) between the devices.

14. The apparatus according to at least one of the preceding claims, **characterized in that** the transmitters and/or receivers are designed as antennas or as an optical coupler having a light-emitting diode or laser diode as a transmitter, and a photo detectoras a receiver.

15. The apparatus according to at least one of the preceding claims, **characterized in that** the apparatus comprises a plurality of devices (2, 3, 8) in series, wherein two devices communicate with one another respectively in such a way that information can be forwarded from one device to the other by means of intermediary devices.

## Revendications

1. Procédé de transmission de données de processus entre différents appareils (2, 3, 8) participant à un processus de fabrication de produits alimentaires et faisant partie d'une ligne de remplissage, qui comprend une machine de remplissage (2) et des appareils accessoires (3, 8) en tant qu'appareils,
**caractérisé en ce que**
la communication de données entre deux appareils des appareils participant s'effectue respectivement exclusivement entre au moins un émetteur (4, 4a) du premier appareil (2) et au moins un récepteur (5, 5a) du deuxième appareil (3), et/ou
entre au moins un émetteur (5, 5b) du deuxième appareil (3) et au moins un récepteur (4, 4b) du premier appareil,
le parcours de transmission se situant entre les deux appareils (2, 3) et la distance 1 entre l'émetteur (4, 4a) et le récepteur correspondant (5, 5a) se situant dans une plage de 1 cm à 1 m.

2. Procédé selon la revendication 1, **caractérisé en ce que** l'émetteur (4, 4a) du premier appareil (2) communique exclusivement avec le récepteur (5, 5a) correspondant du deuxième appareil (3), de manière telle que le récepteur (5) du deuxième appareil (3) réceptionne les données de l'émetteur (4) du premier appareil (2), que les récepteurs (10a, 10) d'un troisième ou autre appareil (8) ne puissent pas réceptionner ces données de processus, et que les récepteurs (10a) du troisième ou autre appareil (8) ne communiquent respectivement qu'avec un seul émetteur.

3. Procédé selon la revendication 1 ou la revendication 2, **caractérisé en ce qu'**un émetteur considéré (4, 4a), notamment une antenne d'émission, est dirigée vers un récepteur (5, 5a) correspondant, notamment une antenne de réception.

4. Procédé selon la revendication 3, **caractérisé en ce que** l'orientation correcte de l'émetteur (4) vers le récepteur (5) est conservée grâce à un couplage mécanique (11) entre les appareils (2, 3).

5. Procédé selon l'une au moins des revendications précédentes, **caractérisé en ce que** la puissance d'émission de l'émetteur (4) du premier appareil (2) est réglée de manière telle que seul le récepteur (5, 5a) correspondant du deuxième appareil réceptionne le signal, la puissance d'un signal radio étant notamment < 10 mW.

6. Procédé selon l'une au moins des revendications 1 à 5, **caractérisé en ce que** l'on fait fonctionner plusieurs paires d'appareils (2, 3, 8) dans le même domaine de fréquences.

7. Procédé selon l'une au moins des revendications précédentes, **caractérisé en ce que** plusieurs appareils (2, 3, 8) sont agencés en série, au moins un appareil (3) entre le premier (2) et le dernier appareil (8) de la série réceptionnant, par l'intermédiaire de son récepteur (5), des données en provenance d'un émetteur (4) de l'appareil précédent (2), et transmettant, par l'intermédiaire d'un émetteur (9), des données à l'appareil (8) suivant.

8. Procédé selon l'une au moins des revendications 1 à 7, **caractérisé en ce que** le parcours de transmission (20) entre émetteur (4, 9) et récepteur (5, 10) est blindé par rapport à l'extérieur.

9. Procédé selon l'une au moins des revendications 1 à 8, **caractérisé en ce qu'**au moins le premier appareil (2) et au moins le deuxième appareil (3) comprend respectivement un dispositif combiné d'émission/réception (4) de façon telle qu'une transmission ne puisse respectivement être possible simultanément que dans une direction, ou bien **en ce que** ledit au moins un premier appareil (2) et au moins le deuxième appareil (3) comprennent respectivement un émetteur (4a, 4b) et un récepteur (5a, 5b) de façon telle qu'un flux de données (20a,b) simultané entre les deux appareils soit possible dans deux directions.

10. Procédé selon l'une au moins des revendications 1 à 9, **caractérisé en ce que** les données sont transmises par l'intermédiaire d'ondes électromagnétiques.

11. Dispositif (1) destiné à la fabrication de produits alimentaires à l'aide de plusieurs appareils (2, 3, 8), les appareils (2, 3, 8) étant des appareils d'une ligne de remplissage comprenant une machine de remplissage (2) et des appareils accessoires (3, 8) en guise d'appareils, le dispositif étant destiné à la mise en oeuvre du procédé selon l'une au moins des revendications 1 à 10, à l'aide d'un premier appareil (2) avec au moins un émetteur (4, 4a), et d'un deuxième appareil (3) avec au moins un récepteur (5, 5a), dispositif dans lequel
la communication de données entre deux appareils des appareils participant s'effectue respectivement exclusivement entre au moins un émetteur (4, 4a) du premier appareil (2) et au moins un récepteur (5, 5a) du deuxième appareil (3), et/ou
entre au moins un émetteur (5, 5b) du deuxième appareil (3) et au moins un récepteur (4, 4b) du premier appareil (2),
le parcours de transmission se situant entre les appareils, et la distance 1 entre émetteur (4, 4a) et récepteur (5) des deux appareils communiquant, se situant entre 1 cm et 1 m.

12. Dispositif selon la revendication 11, **caractérisé en ce que** l'émetteur (4, 4a) est dirigé vers le récepteur (5, 5a) correspondant, et les deux appareils (2, 3) présentent un dispositif de couplage mécanique (6).

13. Dispositif selon l'une au moins des revendications précédentes, **caractérisé en ce que** le dispositif comprend un système de blindage (6), qui est agencé autour du parcours de transmission (20) entre les appareils.

14. Dispositif selon l'une au moins des revendications précédentes, **caractérisé en ce que** les émetteurs et ou récepteurs sont configurés en tant qu'antennes, ou bien en tant qu'optocoupleurs avec une diode luminescente ou laser en tant qu'émetteur et un photo-détecteur en tant que récepteur.

15. Dispositif selon l'une au moins des revendications précédentes, **caractérisé en ce que** le dispositif comprend plusieurs appareils (2, 3, 8) en série, les appareils communiquant réciproquement deux par deux, de façon telle qu'une information soit en mesure d'être transférée d'un appareil à l'autre en transitant par des appareils intermédiaires situés entre-eux.
